# EUROPEAN PATENT APPLICATION

(11) **EP 2 568 748 A1**
(43) Date of publication of application: **13.03.2013**
(21) Application number: 11777466.1
(22) Date of filing: 02.05.2011
(51) Int. Cl.: H04W 36/14, H04W 48/16, H04W 88/06

(54) **MOBILE COMMUNICATION TERMINAL AND METHOD IN MOBILE COMMUNICATION SYSTEM**

(30) Priority: 06.05.2010 JP 2010106574
(71) Applicant: NTT DoCoMo, Inc., Tokyo 100-6150 (JP)
(72) Inventor: TANIKAWA, Hiroaki, Tokyo 100-6150 (JP); KANAUCHI, Masashi, Tokyo 100-6150 (JP)
(74) Representative: Maury, Richard Philip
(86) International application number: PCT/JP2011/060534
(87) International publication number: WO 2011/138947

(57) **Abstract**

A mobile station includes a cell search unit (57) that performs a cell search for a first mobile communication system (LTE) or a second mobile communication system (3G); a storing unit (55) that stores a predetermined correspondence relationship between the mobile communication systems and moving speeds of the mobile station (FIG. 4), wherein the cell search is to be performed for the communication systems; and a moving speed detector (54) that detects a current moving speed of the mobile station, wherein, when a reconnection is required prior to completing a handover from the first mobile communication system to the second mobile communication system, the cell search unit performs the cell search for the mobile communication system corresponding to the current moving speed in the correspondence relationship.

## Description

### TECHNICAL FIELD

The disclosed invention relates to a mobile station and a method for a mobile communication system.

### BACKGROUND ART

Currently, a mobile communication system that can be the successor to the third generation mobile communication system (hereinafter, the 3G system) according to the wideband code division multiple access (W-CDMA) scheme has been studied by the third generation partnership project (3GPP). The 3G system can provide services based on both a circuit switching system and a packet switching system. In general, voice services are provided based on the circuit switching system. The 3G system may be referred to as a UTRAN-based system. On the other hand, for the 3.9 generation mobile communication system according to the long term evolution (LTE: Long Term Evolution) scheme (hereinafter, the LTE system), which is the successor to the 3G system, only the services based on the packet switching system are provided. Therefore, when the voice services are to be provided in the LATE system, it may be required to utilize the Voice over Internet Protocol (VoIP). The LTE system may be referred to as an E-UTRAN system.

However, in order to provide the voice services based on the VoIP, it may be required that a new function called "an IP Multimedia Subsystem (IMS)" has been included in a communication facility. Therefore, at an earlier stage of the introduction of the LTE system, it is expected that coverage by the LTE system will be narrower than that of the 3G system. This implies that it is not realistic to support the voice services only by the LTE system.

Based on such viewpoints, a CS fall back (CSFB: Circuit Switched Fall Back) scheme has been proposed. This causes a handover to the 3G system to be performed for a user being served in the LTE system depending on necessity, thereby making it possible to provide the voice services to the user, who had been served in the LTE system. Conventional techniques for utilizing the CSFB have been described in Patent Documents 1 through 3, for example.

Incidentally, when it is detected that a mobile station is out of a coverage area during communication, a "reconnection" process is to be performed. The process is such that, when it is detected that the mobile station is out of the coverage area (for example, a case where radio quality is degraded and it becomes impossible to continue the communication in the serving area), a cell search is performed so that it is returned to the serving area, and a connection with the detected cell is re-established. The "reconnection" is a process that is required for various cases, and it is possible that the reconnection is required during performing the above-described CSFB process. The "reconnection" is to be quickly and successfully performed. However, it is not defined in the 3GPP specifications as to how the cell search is performed during the "reconnection" in the middle of performing the CSFB procedure.

### RELATED ART DOCUMENT

### [PATENT DOCUMENT]

Patent Document 1: Japanese Patent Laid-Open Application No. 2010-63151
Patent Docuemnt 2: Japanese Patent Laid-Open Application No. 2010-45746
Patent Document 3: Japanese Patent Laid-Open Application No. 2010-45728

### SUMMARY OF THE INVENTION

### PROBLEM TO BE SOLVED BY THE INVENTION

The problem of the disclosed invention is to perform the reconnection quickly and successfully, for example, in a case where the reconnection is required during performing an inter-system handover, such as the CSFB.

### MEANS FOR SOLVING THE PROBLEM

A mobile station according to one embodiment of the disclosed invention is a mobile station including a cell search unit that performs a cell search for a first mobile communication system or a second mobile communication system; a storing unit that stores a predetermined correspondence relationship between the mobile communication systems and moving speeds of the mobile station, wherein the cell search is to be performed for the communication systems; and a moving speed detector that detects a current moving speed of the mobile station, wherein, when a reconnection is required prior to completing a handover from the first mobile communication system to the second mobile communication system, the cell search unit performs the cell search for the mobile communication system corresponding to the current moving speed in the correspondence relationship.

### EFFECT OF THE PRESENT INVENTION

With the disclosed invention, for example, in the case where the inter-system handover such as the CSFB is required, the reconnection can be quickly and successfully performed.

### BRIEF DESCRIPTION OF THE DRAWINGS

FIG. 1 is a diagram showing a sequence of CSFB processes;
FIG. 2 is a diagram showing a sequence of reconnection processes;
FIG. 3 is a diagram showing an example of a method for determining a system where a cell search is to be performed;
FIG. 4 is a diagram showing a relationship between moving speeds and time intervals for the cell search; and
FIG. 5 is a functional block diagram of a mobile station.

### EMBODIMENTS FOR CARRYING OUT THE INVENTION

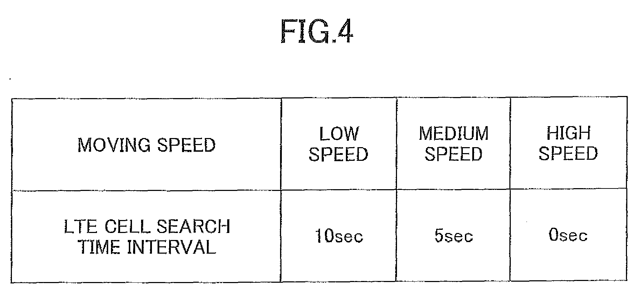

(1) A mobile station according to one embodiment of the disclosed invention is a mobile station including a cell search unit (57) that performs a cell search for a first mobile communication system or a second mobile communication system; a storing unit (55) that stores a predetermined correspondence relationship between the mobile communication systems and moving speeds of the mobile station (FIG. 4), wherein the cell search is to be performed for the communication systems; and a moving speed detector (54) that detects a current moving speed of the mobile station, wherein, when a reconnection is required prior to completing a handover from the first mobile communication system to the second mobile communication system, the cell search unit performs the cell search for the mobile communication system corresponding to the current moving speed in the correspondence relationship.
   Since the cell search is performed for the suitable mobile communication system depending on the current moving speed, the reconnection can be performed quickly and successfully.
(2) The correspondence relationship stored in the storing unit may indicate, for each of the plural moving speeds, a time interval for performing the cell search for the first mobile communication system or the second mobile communication system. A probability of detecting the cell in the serving cell depends on as to whether the moving speed is high. Therefore, this configuration is preferable from the viewpoint that, in the system where the probability of detecting the cell is high, the longer cell search is performed.
(3) The correspondence relationship stored in the storing unit may indicate that, when the moving speed is greater than or equal to a predetermined value, the cell search is performed for the second mobile communication system, and that, when the moving speed is less than the predetermined value and no cells have been detected after the cell search has been performed for a certain period of time for the first mobile communication system, the cell search is performed for the second mobile communication system. This configuration is also preferable from the viewpoint that, in the system where the probability of detecting the cell is high, the longer cell search is performed.
(4) The first mobile communication system may provide services based on a packet switching system but may not provide services based on a circuit switching system, while the second mobile communication system may provide both the services based on the packet switching system and the services based on the circuit switching system. The disclosed invention is particularly advantageous for a handover between such systems.
(5) A method according to one embodiment of the disclosed invention is a method used for a mobile station including a step of detecting whether a reconnection is required prior to completing a handover from a first mobile communication system to a second mobile communication system (S31); a step of detecting a current moving speed of the mobile station (S32); a step of performing a cell search for the mobile communication system corresponding to the current moving speed (S34-S36) by referring to a predetermined correspondence relationship between the mobile communication systems and moving speeds of the mobile station (S33), wherein the cell search is to be performed for the mobile communication systems.

Since the cell search is performed for the mobile communication system which is suitable for the cell search depending on the current moving speed, the reconnection can be performed quickly and successfully.

The embodiments will be explained from the following viewpoints.
1. CSFB sequence
2. Reconnection processing sequence
3. Mobile station

### <First Embodiment>

### <1. CSFB sequence>

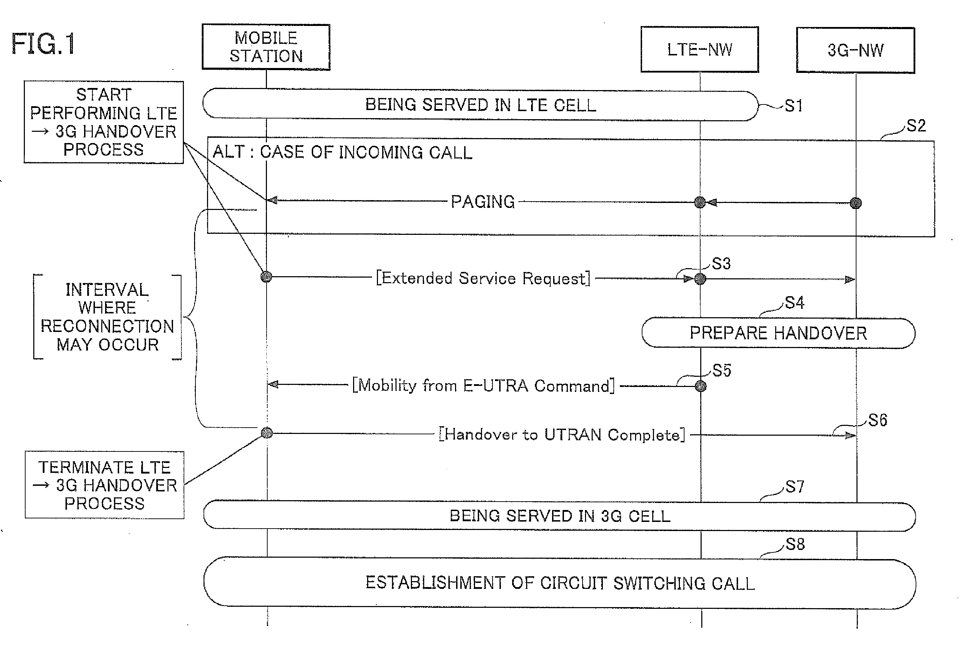

FIG. 1 shows a sequence of the CSFB processes that is used for the embodiment. The CSFB scheme is for causing a handover to the 3G system to be performed for a user being served in the LTE system depending on necessity. For the sake of the explanation, the CSFB scheme is considered as an example. However, the disclosed invention is not limited to the CSFB scheme, and it can widely be applied to cases where inter-system handovers are performed. For example, it can be applied to a handover from a system, where only the services based on the packet switching system are provided, to a system, where both the services based on the packet switching system and the services based on the circuit switched system are provided. For example, the disclosed invention may be used for various handovers among systems such as a W-CDMA based system, a GSM based system, a HSDPA/HSUPA based W-CDMA system, an LTE system, an LTE-Advanced system, an IMT-Advanced system, a WiMAX based system, a Wi-Fi based system, and the like.

At step S1, the mobile station is served in the LTE system. In the figure, LTE-NW shows functional elements at a side of a network in the LTE system. Specifically, it is a base station (eNB), a switching system (MME), and the like.

At step S2, an incoming call has occurred for the user of the mobile station. In the figure, 3G-NW indicates functional elements at a side of a network in the 3G system. Specifically, it is a base station (NodeB or BS), a radio network controller (RNC), a core network (CN), and the like. In the example shown in the figure, a circuit switching call is generated from the side of the 3G system, and the occurrence of the incoming call is reported to the user being served in the LTE system by paging. The 3G system can provide services based on both the circuit switching system and the packet switching system. On the other hand, in the LTE system, only the services based on the packet switching system are provided. Therefore, in order to respond to the circuit switching call, the user's mobile station is required to be connected to the circuit switching call subsequent to performing a handover from the LTE system to the 3G system.

At step S3, in response to the paging, the mobile station transmits an extended service request to the network of the LTE system. The mobile station requests to start performing the processes of the CSFB by transmitting the extended service request. In response to this, the LTE system and the 3G system start performing the processes of the inter-system handover (step S4).

In the example shown in the figure, the extended service request of step S3 is transmitted in response to the incoming call from the 3G system at step S2. However, this is not mandatory. Conversely, the extended service request may be transmitted in response to an attempt of the mobile station being served in the LTE system to place a circuit switching call.

At step S5, a handover command (Mobility from E-UTRA command) is reported to the mobile station.

At step S6, in response to the reception of the handover command, the mobile station reports to the network of the 3G system (e.g., the base station and the radio network controller) that the handover has been completed (Handover to UTRAN Complete).

At step S7, the mobile station is served in a cell of the 3G system. At step S8, a process of establishing the circuit switching call is continued. Subsequently, the communication based on the circuit switching system is performed.

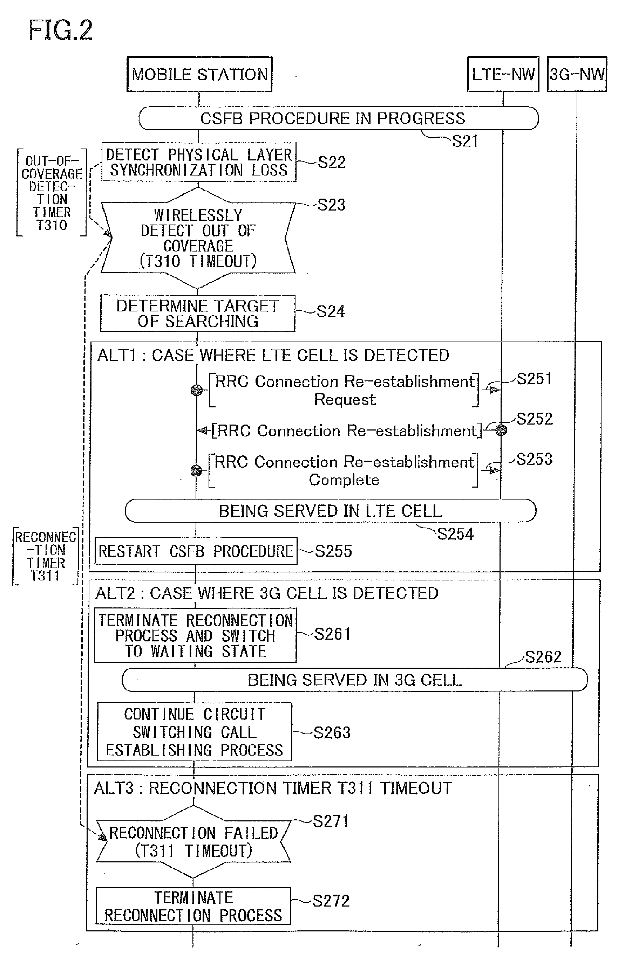

As described, there are many procedures during the time period for the mobile station being served in the LTE cell to be switched to the 3G cell and to establish the circuit switching call. During the time period, it is possible that a reconnection is required. The reconnection that is particularly concerned for the present application is the reconnection that occurs between step S2 and S6. The processes of the reconnection will be explained while referring to FIG. 2.

### <2. Reconnection processing sequence>

FIG. 2 shows a sequence of the reconnection processes. At step S21, the mobile station performs the process of the CSFB, which has been explained by FIG. 1.

At step S22, the mobile station detects synchronization loss at a physical layer prior to the completion of the CSFB process. The synchronization loss occurs due to various causes. For example, it occurs when the radio quality is degraded to be less than the threshold value. When the mobile station detects the synchronization loss, an out-of-coverage detection timer T310 is activated.

At step S23, when the out-of-coverage detection timer T310 expires, currently, it is out of the coverage area, and the reconnection is required. The mobile station activates a reconnection timer T311.

At step S24, the mobile station searches for a cell which can serve, so as to return inside the coverage area. In this case, since different types of radio access technology are used for the LTE system and the 3G system, it may not be possible to simultaneously search for a LTE cell and a 3G cell. Therefore, it may be required to determine which system's cell is to be searched for.

One method of determining a system, where the cell search is to be performed, is such that, first the cell of the system, where the communication had been performed immediately prior to becoming out of the coverage area, is searched for, and if no suitable cell is detected, a cell of another system is searched for. For the case of the current example, it is considered that, first, a cell of the LTE system is searched for, and if no suitable cell is detected, a cell of the 3G system is searched for. However, when the mobile station is moving at a high speed, the likelihood of detecting a cell of the LTE system is not large due to a narrow coverage (or, even if the coverage is sufficient, due to a cause of radio characteristic under a high-speed moving environment). Moreover, the mobile station is ultimately to perform a handover to a cell of the 3G system. For the reconnection under such a circumstance, when the mobile station searches for a cell of the LTE system, it is likely that the reconnection to the cell of the LTE system will fail, or even if the reconnection was successful, it is likely that it takes a longer time to be switched to the 3G system and to connect the circuit switching call.

In order to resolve such a concern, it may be considered that, first the cell of the 3G system is searched for, and if no suitable cell is detected, the cell of the LTE system is searched for. In such a case, since the mobile station has been served in the LTE system, the mobile station has not obtained information which is necessary for the reconnection in the 3G system. Therefore, first broadcast information of the cell of the 3G system is received. The reconnection becomes possible subsequent to obtaining the information which is necessary for the reconnection. Therefore, when both the reconnection to the cell of the LTE system and the reconnection to the cell of the 3G system are possible, the mobile station can quickly perform the reconnection to the cell of the LTE. However, it takes a longer time to perform the reconnection to the cell of the 3G system. For example, when the moving speed of the mobile station is low, it is highly likely that the mobile station is served in the cell of the LTE system during the time of the reconnection. Therefore, when the moving speed of the mobile station is low, it is preferable that first the cell of the LTE system is searched for, the reconnection is quickly performed, and subsequently the handover to the 3G system is performed. Conversely, when the cell of the 3G system is previously searched for, it is likely that it takes longer time to perform the reconnection.

From such viewpoints, in the embodiment, the system, for which the cell search is performed, is determined depending on the moving speed of the mobile station.

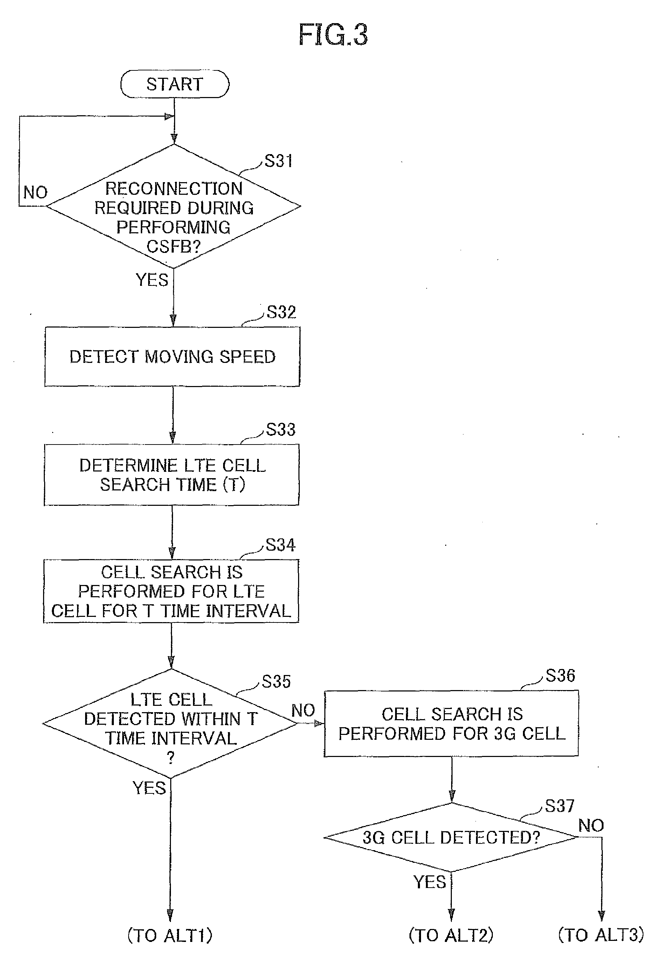

FIG. 3 shows an example of a method of determining the system, for which the cell search is performed, according to the embodiment.

When the mobile station recognizes that a reconnection is required during performing the CSFB process at step S31, the method proceeds to step S32. This corresponds to that, at step S23 of FIG. 2, the out-of-coverage detection timer T310 expires and step S24 is reached.

At step S32, the mobile station detects a moving speed. The moving speed may be measured or detected by any suitable method that has been known in the technical field. For example, the moving speed may be detected by detecting the maximum Doppler frequency of a pilot signal, which has been received from a base station.

At step S33, the mobile station determines a cell search time interval (T), during which a cell of the LTE system is searched for. A correspondence relationship between the moving speeds and the cell search time intervals (T) has been determined in advance, and it is stored in a memory of the mobile station.

FIG. 4 shows an example of such a correspondence relationship. When the moving speed of the mobile station is high, the time interval for searching for a cell in the LTE system is set to be zero. In this case, the mobile station searches for a cell of the 3G system at the beginning, without searching for a cell of the LTE system. When the moving speed is a medium speed, the time interval for searching for a cell of the LTE system is five seconds. If no cell of the LTE system is detected within the five seconds, the mobile station searches for a cell of the 3G system. When the moving speed is a low speed, the time interval for searching for a cell of the LTE system is ten seconds. If no cell of the LTE system is detected within the ten seconds, the mobile station searches for a cell of the 3G system. Therefore, when the moving speed is a high speed, first a cell of the 3G system is searched for. When the moving speed is not a high speed, first a cell of the LTE system is searched for. Further, as the moving speed becomes lower, the time interval for searching for a cell of the LTE system becomes longer. This corresponds to that, as the moving speed becomes lower, the probability of detecting a cell of the LTE system becomes larger. In the example shown in the figure, the moving speeds are divided into three steps. However, this is not required, and it can be two steps or four or more steps. Further, the number of seconds for performing the search is merely an example, and other numerical values may be used. However, it is preferable that the time interval for searching for a cell of the LTE system become longer, as the moving speed becomes lower. In FIG. 4, only the time intervals for searching for a cell of the LTE system are shown. However, the time intervals for searching for a cell of the 3G system can be obtained by reverse calculation from the time period of the reconnection timer. This is because the total of the cell search time interval of the LTE system and the cell search time interval of the 3G system is substantially equal to the reconnection timer T311.

At step S33 of FIG. 3, the cell search time interval (T) corresponding to the current moving speed is determined based on the correspondence relationship such as shown in FIG. 4.

At step S34, the mobile station searches for a cell of the LTE system for the determined cell search time interval (T). However, when the cell search time interval (T) is zero, the method proceeds to step S36, and a cell of the 3G system is searched for at the beginning.

At step S35, it is determined whether a suitable cell has been detected within the cell search time interval (T). When it has been detected, the method proceeds to ALT1 of FIG. 2. When it has not been detected or the cell search time interval (T) is zero, the method proceeds to step S36.

At step S36, the mobile station searches for a cell of the 3G system until the reconnection timer T311 is expired.

At step S37, it is determined whether a suitable cell has been detected. When it has been detected, the method proceeds to ALT2 of FIG. 2. When it has not been detected, the method proceeds to ALT3 of FIG. 2.

For the case of ALT1 of FIG. 2, the mobile station has detected a cell of the LTE system, to which the reconnection is to be performed. The mobile station performs procedures for reestablishing the connection for the detected cell. Specifically, at step S251, the mobile station transmits a RRC Connection Re-establishment Request to the network of the LTE system. In response to this, at step S252, the network transmits a RRC Connection Re-establishment message to the mobile station. In response to this, at step S253, the mobile station transmits a RRC Connection Re-establishment Complete message to the network. At step S254 and after, the mobile station is served in the cell of the LTE system, and restarts the CSFB procedure, which has been interrupted. Though it is not shown in the figure, the circuit switching call is established after the CSFB procedure.

For the case of ALT2 of FIG. 2, the mobile station has detected a cell of the 3G system, to which the reconnection is to be performed. At step S261, the mobile station terminates the reconnection process, receives the broadcast information from the cell of the 3G system, and switches to a waiting state in the cell. Subsequently, as shown in step S262, the mobile station is served in the 3G cell. At step S263, the mobile station performs a process to establish the circuit switching call. Steps S262 and S263 correspond to steps S7 and S8 in FIG. 1.

For the case of ALT3 of FIG. 2, the mobile station has not detected a cell to which the reconnection is to be performed until the expiration of the reconnection timer T311 (step S271). In this case, the reconnection has been failed, and at step S272, the process of the reconnection is terminated.

### <3. Mobile Station>

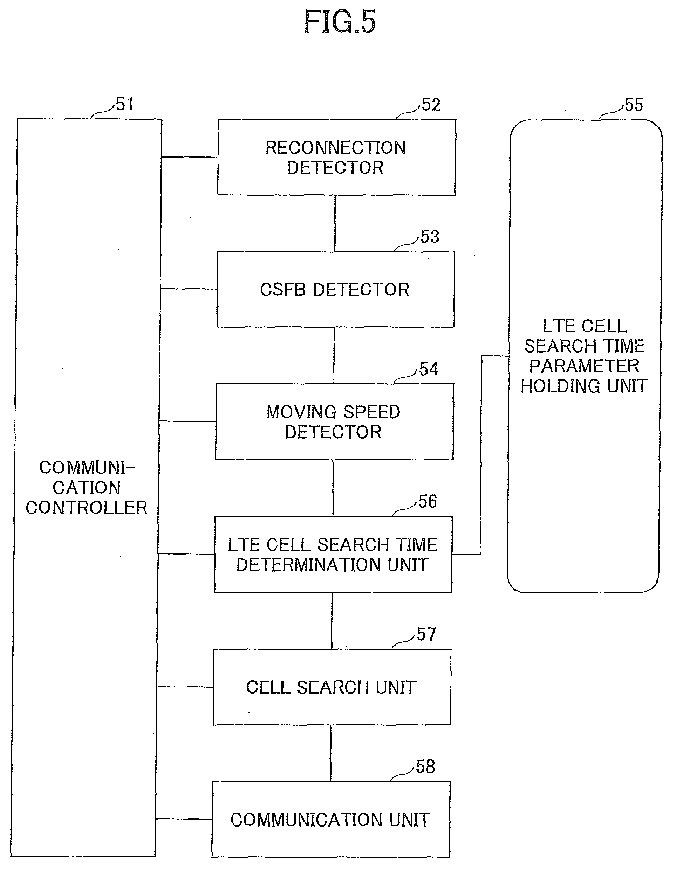

FIG. 5 is a block diagram of the mobile station that performs the processes shown in FIGS. 1-3. Among various functional elements included in the mobile station, FIG. 5 shows a communication controller 51; a reconnection detector 52; a CSFB detector 53; a moving speed detector 54; a LTE search time parameter storing unit 55; a LTE cell search time determination unit 56; a cell search unit 57; and a communication unit 58.

The communication controller 51 controls operations of the functional elements in the mobile station.

The reconnection detector 52 detects that the reconnection is required. For example, it detects that the radio quality is degraded and that the continuation of the communication in the serving cell becomes impossible.

The CSFB detector 53 detects that the CSFB process is required. For example, when a circuit switching call is received or an outgoing circuit switching call is made, while a cell of the LTE system is serving, the CSFB process is required. The CSFB makes it possible to provide circuit switching services at the 3G side by causing a handover from the LTE system to the 3G system to be performed for a user.

The moving speed detector 54 detects a current moving speed of the mobile station. For example, the moving speed may be detected by detecting the maximum Doppler frequency of the pilot signal, which has been received from the base station.

The LTE search time parameter holding unit 55 holds the correspondence relationship between the systems, for which the cell search is performed, and the moving speeds. As shown in FIG. 4, an example of the correspondence relationship is the correspondence relationship between the moving speeds and the cell search time intervals (T) for the LTE system.

The LTE cell search time determination unit 56 determines the cell search time interval (T) corresponding to the current moving speed from the above-described correspondence relationship.

The cell search unit 57 searches for a cell of the LTE system for the cell search time interval (T). When no suitable cell has been detected, it searches for a cell of the 3G system. When the cell search time interval (T) is zero, the cell search unit 57 searches for a cell of the 3G system at the beginning, without searching for a cell of the LTE system.

The communication unit 58 transmits and receives signals that are communicated with the network under the control of the communication controller 57.

In the above, the explanation has been provided while referring to the specific embodiments, but the embodiments are merely illustrative, and variations, modifications, alterations and substitutions could be conceived by those skilled in the art. For example, the disclosed invention may be applied to any appropriate mobile communication system where a handover between different systems is performed. For example, the disclosed invention may be applied to various handovers among systems such as a W-CDMA system, a GSM system, a HSDPA/HSUPA based W-CDMA system, an LTE system, an LTE-Advanced system, an IMT-Advanced system, a WiMAX based system, a Wi-Fi based system and the like. Specific examples of numerical values have been used in order to facilitate understanding of the invention. However, these numerical values are simply illustrative, and any other appropriate values may be used, except as indicated otherwise. The separations of the embodiments or the items are not essential to the present invention, and subject matter described in two or more items may be combined and used (provided that they do not contradict) depending on necessity. For the convenience of explanation, the devices according to the embodiments of the present invention have been explained by using functional block diagrams. However, these devices may be implemented in hardware, software, or combinations thereof. The present invention is not limited to the above-described embodiments, and various variations, modifications, alterations, substitutions and so on are included, without departing from the spirit of the present invention.

The present international application claims priority based on Japanese Patent Application No. 2010-106574, filed on May 6, 2010, the entire contents of which are hereby incorporated by reference.

## Claims

1. A mobile station comprising:
a cell search unit that performs a cell search for a first mobile communication system or a second mobile communication system;
a storing unit that stores a predetermined correspondence relationship between the mobile communication systems and moving speeds of the mobile station, wherein the cell search is to be performed for the communication systems; and
a moving speed detector that detects a current moving speed of the mobile station,
wherein, when a reconnection is required prior to completing a handover from the first mobile communication system to the second mobile communication system, the cell search unit performs the cell search for the mobile communication system corresponding to the current moving speed in the correspondence relationship.

2. The mobile station according to claim 1,
wherein the correspondence relationship stored in the storing unit indicates, for each of the plural moving speeds, a time interval for performing the cell search for the first mobile communication system or the second mobile communication system.

3. The mobile station according to claim 2,
wherein the correspondence relationship stored in the storing unit indicates that, when the moving speed is greater than or equal to a predetermined value, the cell search is performed for the second mobile communication system, and that, when the moving speed is less than the predetermined value and no cells have been detected after the cell search has been performed for a certain period of time for the first mobile communication system, the cell search is performed for the second mobile communication system.

4. The mobile station according to any one of claims 1-3,
wherein the first mobile communication system provides services based on a packet switching system, and the first mobile communication system does not provide services based on a circuit switching system, and
wherein the second mobile communication system provides both the services based on the packet switching system and the services based on the circuit switching system.

5. A method used for a mobile station comprising:
a step of detecting whether a reconnection is required prior to completing a handover from a first mobile communication system to a second mobile communication system;
a step of detecting a current moving speed of the mobile station; and
a step of performing a cell search for the mobile communication system corresponding to the current moving speed by referring to a predetermined correspondence relationship between the mobile communication systems and moving speeds of the mobile station, wherein the cell search is to be performed for the mobile communication systems.
